# EUROPEAN PATENT APPLICATION

(11) **EP 3 168 543 A1**
(43) Date of publication of application: **17.05.2017**
(21) Application number: 15818643.7
(22) Date of filing: 27.04.2015
(51) Int. Cl.: F24F 7/04, F24F 7/06, F24F 13/078

(54) **MULTI-FUNCTIONAL VENTILATION SYSTEM**

(30) Priority: 08.07.2014 KR 20140005120 U
(71) Applicant: Kwon, Woo Duk, Busanjin-gu Busan 614-841 (KR)
(72) Inventor: Kwon, Woo Duk, Busanjin-gu Busan 614-841 (KR)
(74) Representative: Beetz & Partner mbB
(86) International application number: PCT/KR2015/004186
(87) International publication number: WO 2016/006809

(57) **Abstract**

The objective of the present invention is to provide a multi-functional ventilation system allowing smooth ventilation by simultaneously suctioning and discharging air through one exhaust pipe, reducing installation costs by reducing installation time, and facilitating the maintenance thereof. The multi-functional ventilation system of the present invention comprises: a fixing bracket (110) mounted on an interior ceiling panel; a lighting bracket (120) provided to be spaced at a predetermined interval at the bottom of the fixing bracket (110); a lighting means (130) provided at the bottom of the lighting bracket (120); a lighting cover (140) mounted at the bottom of the lighting bracket (120) so as to cover the lighting means (130); and a bidirectional vent (150) comprising an exhaust part (151) through which interior air is discharged to the exterior thereof and an intake part (152) through which external air flows into the interior thereof, wherein one end of the exhaust part (151) is open to the bottom of the fixing bracket (110) so as to communicate with the interior and the other end thereof communicates with the exhaust pipe (210) provided with a blower (230), and one end of the vent is open to the bottom of the lighting cover (140) by passing the lighting bracket (120) through the inside of the exhaust part (151) and the other end thereof communicates with an intake pipe (220) into which the external air flows.

## Description

### Technical Field

The present invention relates to a multi-functional ventilation system, and particularly, to a multi-functional ventilation system which discharges interior air ofa bathroomor the like to the outside and simultaneously introduces external air into the interior thereof.

### Background Art

In general, any living space, for example, multi-unit residences, such as apartment buildings or efficiencyapartment buildings,in which people live their lives,are provided with bathroomsused for basal metabolism of people, wherein the bathroom is a place for mainly processing excretion, and thus bathrooms are traditionally installed at locations from isolated human residential facilities, but as societyhas been modernized, urban population has increased, and housing culture has changed towardsmulti-unit residences, such as apartment buildings, nowadays most bathrooms are installed and used inside a human residential space.

Accordingly, an exhaust facility is installed ata ceiling panel inside ofabathroomin most multi-unit residences, and a ventilator fan for smooth ventilation is provided at the top or side of an area where the exhaust facility is installed to remove moisture or odor generated in the bathroom.

A ventilation system is providedin a building such as an efficiency apartment building in addition to in a bathroom to forcibly ventilate air with an individual ventilation facility because natural ventilation of each officeis not smooth.

However, since only exhaust facilities for discharging interior air to the outside of a room have been conventionally provided, an exhaust function could not be smoothly performed in a state in which a door was closed, that is, when the insideof the room was closed.

That is, it is required to intake as much air as the amount of air exhausted for air ventilation, but in a closed state, the amount of intake air is insufficient compared to the amount of exhaust air, and hence smooth ventilation cannot be performed.

### Technical Problem

In order to solve the above-described problems, the present invention is directed to provide a multi-functional ventilation system which allows smooth ventilation by simultaneously suctioning and discharging air through an exhaust pipe, reduces installation cost by reducing installation time, and facilitates maintenance thereof.

### Technical Solution

One aspect of the present invention provides a multi-functional ventilation system including: a fixing bracket (110) mounted at an interior ceiling panel; a lighting bracket (120)installedunder the fixing bracket (110)to be spaced a predetermined interval from the fixing bracket (110); a lighting unit(130)installedunder the lighting bracket (120); a lighting cover (140) mounted under the lighting bracket (120) to cover the lighting unit(130); and a bidirectional vent (150)includingan exhaust part (151) through which interior air is discharged outdoors and an intake part (152) through which external air flows indoors, wherein one end of the exhaust part (151) is open to the bottom of the fixing bracket (110) to communicate with an inside of a room and the other end thereof communicates with the exhaust pipe (210) at which a blower (230) is installed, and one end of the intake part (152)passes through the lighting bracket (120) through an inside of the exhaust part (151) and is open to a bottom of the lighting cover (140) and the other end thereof communicates with an intake pipe (220) into which the external air is introduced.

The multi-functional ventilation system may further include a sensor(160) mounted on the fixing bracket (110) and configured to detect an occurrence of indoor fire, wherein when the sensor(160) detects the occurrence of indoor fire, the blower (230) is operated to forcibly discharge the interior air to the outside.

The multi-functional ventilation system may further include an emergency lamp(170) installed at the lighting bracket (120) and operated by power supplied from an internal battery in an event of power shut-off due to a fire.

The multi-functional ventilation system may further include a filter(180) mounted at one end of the intake part (152) and configured to collect debris in the external air.

The multi-functional ventilation system may further include a fire extinguishing agent applying pipe (190) having one end connected with an automatic fire extinguisher (300)installed in the outside and the other end configured to communicate with the insideof the room through the bidirectional vent (150), wherein when the sensor(160) detects the occurrence of fire, the automatic fire extinguisher (300) is automatically operated to sprinkle a fire extinguishing agent indoors through the fire extinguishing agent applying pipe (190).

### Advantageous Effects

According to the embodiments of the present invention, the multi-functional ventilation system has the following effects.

Suctioning and discharging of air can be smoothly performed through one pipe by abidirectional vent (150), and in particular, since an inlet of anexhaust part (151) and an outlet of an intake part (152) are blocked from each other by alighting bracket (120), an effect in that introduced outside air is uniformly distributed inside a room and ventilation is effectively performed is achieved.

In addition, the bidirectional vent (150) and the lighting unit(130) are integrated into one unit by the lighting bracket (120) so that it is possible to implement lighting and ventilation functions with one facility, and consequently individual lighting installation is not required, thereby reducing overall installation costs.

### Description of Drawings

FIG. 1 is a perspective view of a multi-functional ventilation apparatus according to one embodiment of the present invention.
FIG. 2 is a cross-sectional structural view of the multi-function ventilation apparatus according to one embodiment of the present invention.
FIG. 3 is a diagram illustrating a piping structure of a ventilation system using the multi-function ventilation apparatus according to one embodiment of the present invention.
FIG. 4 is a cross-sectional structural view of a multi-functional ventilation apparatus according to another embodiment of the present invention.
FIG. 5 is a cross-sectional structural view of the multi-function ventilation apparatus according to another embodiment of the present invention.
FIG. 6 is a diagram illustrating a piping structure of a ventilation system using a ventilation apparatus according to a related art.

### Mode for Invention

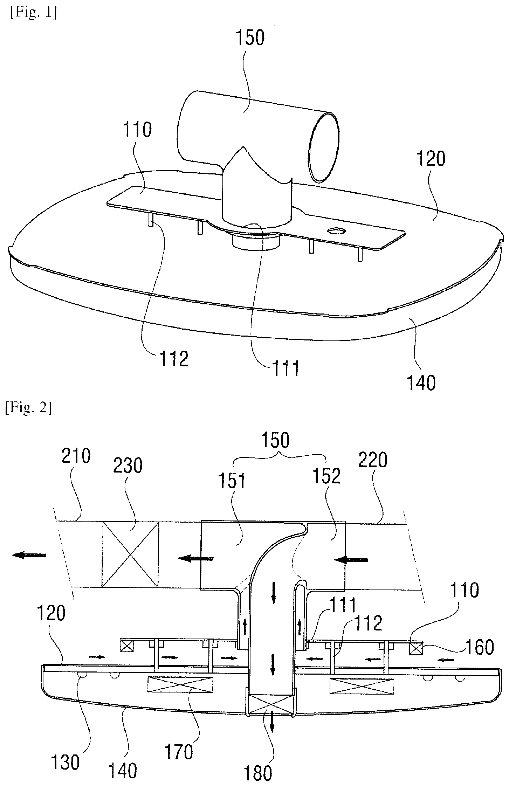

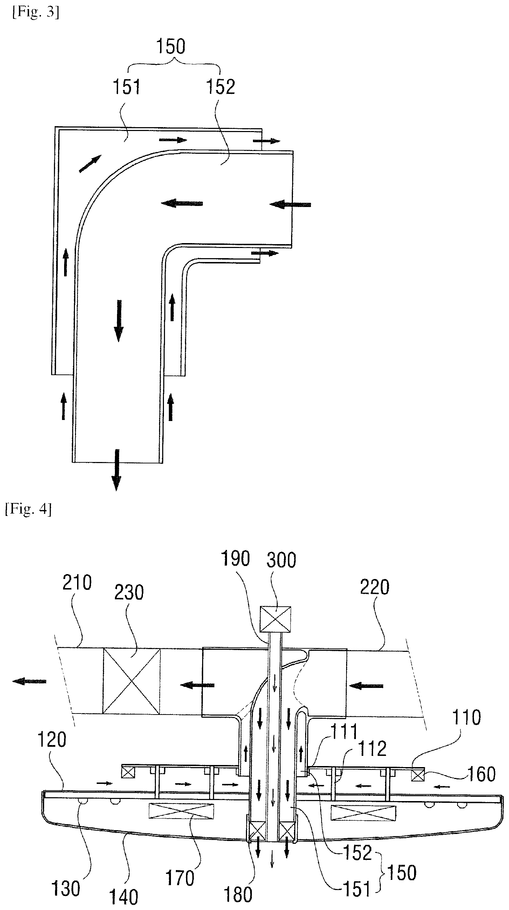

FIG. 1 is a perspective view of a multi-functional ventilation apparatus according to one embodiment of the present invention,FIG. 2 is a cross-sectional structural view of the multi-function ventilation apparatus according to one embodiment of the present invention,and FIG. 3 is a diagram illustrating a piping structure of a ventilation system using the multi-function ventilation apparatus according to one embodiment of the present invention.

As illustrated in FIGS. 1 and 2, the multi-functional ventilation apparatus according to one embodiment of the present invention includes a fixing bracket 110, a lighting bracket 120, a lighting unit 130, a lighting cover 140, a bidirectional vent 150, a sensor 160, an emergency lamp 170, and a filter 180.

The fixing bracket 110 is formed in a flat planar shape, which islong in a lateral direction, and has a throughhole 111 in the center thereof through which a bottom end ofan exhaust part 151 of the bidirectional vent 150, which will be described below, is mounted.

In addition, a bolt 112 for fixing the lighting bracket 120, which will be described below, protrudes downward to be long from the bottom of the fixing bracket 110.

The fixing bracket 110 is fixedly mounted at an interior ceiling panel to support the lighting bracket 120 and the bidirectional vent 150.

The lighting bracket 120 is in the form of a roughlyrectangular flat plate and a width and height thereof are greater than those of the fixing bracket 110 to cover the fixing bracket 110.

In addition, the lighting bracket 120 is fixed to an end of the bolt 112 to be installed at the interior ceiling.

In this case, the lighting bracket 120 is provided to be spaced a predetermined interval from the bottom of the fixing bracket 110, and interior air passing through a gap between the fixing bracket 110 and the lighting bracket 120 flows to the outside through the exhaust part 151 of the bidirectional vent 150, which will be described below.

In addition, the lighting unit 130 is mounted on the lighting bracket 120.

The lighting unit 130 is formed with a general LED, and thus a detailed description thereof will be omitted.

The lighting cover 140 is provided under the lighting bracket 120 to surround edges of the lighting bracket 120, and functions to uniformly diffuse light generated by the lighting unit 130 to the outside.

The bidirectional vent 150 is provided in a roughly T-shaped pipe form and the inside thereof is divided into the exhaust part 151 through which interior air is discharged to the outside thereof and an intake part 152 through which external air flows indoors.

Specifically, alowerend of the exhaust part 151 is open to the bottom of the fixing bracket 110 to communicate with the insideof the room and anupper end thereof is open towarda left side thereof and is connected to an exhaust pipe 210,at which a blower 230 is installed,to communicate with the inside of the exhaust pipe 210, as shown in FIG. 2.

That is, the exhaust part 151 is a cylindrical pipein a roughly upside-down L-shape, and a loweropening thereof is fixed to the fixing bracket 110 and an upper end thereof is disposed above the ceiling such that an outletof the exhaust part 151 at the left side is connected to the exhaust pipe 210.

The exhaust part 151 functions as a path which allows the interior air to be suctioned through the lowerend thereof and moved to the upper end thereof.

The intake part 152 has a roughly horizontally reversed upside-down L shape, and a lowerend thereof protrudes downwards, passes through the inside of the exhaust part 151,passes through the fixing bracket 110 and the lighting bracket 120, and is provided at the bottom of the lighting cover 140.

In addition, an upper end of the intake part 152 is integrally connected with the exhaust part 151, is open towarda right side thereof, and is connected to the intake pipe 220 for communicating with each other, into which external air is introduced.

In this case, the intake part 152 is a paththat is blocked from the exhaust part 151.

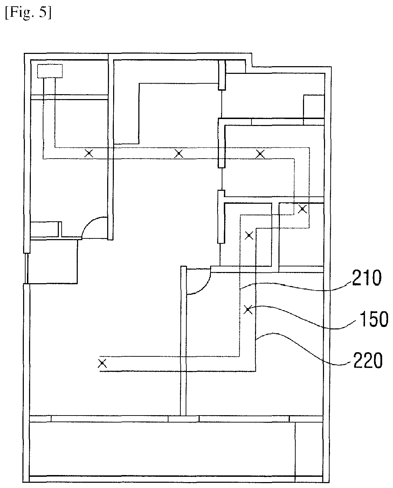

The above-described bidirectional vent 150 may be provided between the exhaust pipe 210 and the intake pipe 220 as shown in FIG. 5, thereby making it possible to reduce the number of ventilation apparatuses to be installed.

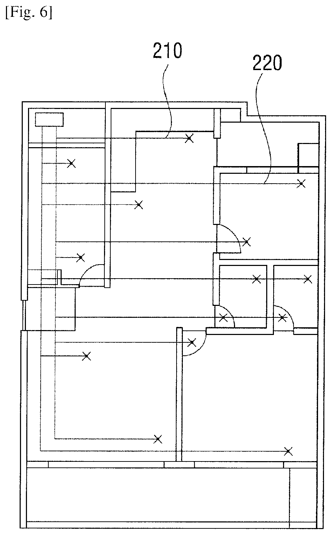

That is, conventionally, because the exhaust pipe 210 and the intake pipe 220 are individually installed for each indoor spaceas shown in FIG. 6, the number of installations of pipesis large and hence a long installation time is required, thereby increasing installation costs.

However, since the bidirectional vent 150 is usedas shown in FIG. 5, the exhaust pipe 210 and the intake pipe 220 are installed side by side along the same path, and since only one bidirectional vent 150 is installed between the exhaust pipe 210 and the intake pipe in each interior area, it is possible to greatlyreduce installation time and costs.

As described above,since the bidirectional vent 150 has the intake part 152 which passes through the inside of the exhaust part 151 to communicate with the inside of the room, simultaneous suctioning and discharging of air through one component is performed and it is possible to reduce the amount of work during a pipe installation process and, in turn, reduce installation costs and also facilitate maintenance.

In addition, the bidirectional vent 150 may be formed such that the upper end of the exhaust part 151 protrudes toward the right side thereof in the same manner as the upper end of the intake part 152in some cases, as shown in FIG. 3.

That is, the upper end of the intake part 152 is provided inside of the upper end of the exhaust part 151, and since pipe installation is performed one timealong only one pathin this case, an installation process can be facilitated.

Meanwhile, the sensor 160 is provided at each of left and right ends of the fixing bracket 110 to detect an occurrence of indoor fire.

Specifically, the sensor 160 may be formed with a general fire detectingsensor capable of sensing an occurrence of fire, such as a smoke detectingsensor, a carbon monoxide detecting sensor, or a heat detecting sensor.

The sensor 160 analyzes air passing between the fixing bracket 110 and the lighting bracket 120 and flowing to the exhaust part 151 to determine an occurrence of fire.

In addition, when the sensor 160 detects an occurrence of indoor fire, the sensor 160 controls the blower 230 to be activated to forcibly discharge interior air to the outside thereof and operates the emergency lamp 170 or an automatic fire extinguisher 300.

The emergency lamp 170 is a lighting device with a battery installed therein and is not operated in a normal environment, but is operated when the sensor 160 detects an occurrence of indoor fire so that indoor people can promptly evacuate.

The emergency lamp 170 is mounted under the lighting bracket 120.

Meanwhile, the filter 180 is mounted on the intake part 152 of the bidirectional vent 150.

The filter 180 is formed with the same structure as a filter used in a general air purifieror the like and is mounted at anoutlet of a lower end of the intake part 152 such that debris in external air flowing into the room can be collected.

Meanwhile, a fire extinguishing agent applying pipe 190 may be installed in the bidirectional vent 150in some cases, as shown in FIG. 4.

The fire extinguishing agent applying pipe 190 has a shape of a vertically long pipe, wherein an upper end thereof is connected with the automatic fire extinguisher 300 installed externally and a lowerend thereof is connected with the insideof the room by passing through the center of the bidirectional vent 150.

That is, the fire extinguishing agent applying pipe 190 is installedsothat the bottom end thereof passes through the upper part of the exhaust pipe 210 to communicate with the insideof the room through the lowerend of the intake pipe 220.

When the sensor 160 detects an occurrence of indoor fire, the sensor 160 operates the automatic fire extinguisher 300 to sprinklefire extinguishing agent indoors through the fire extinguishing agent applying pipe 190.

As described above, since the fire extinguishing agent applying pipe 190 connected with the automatic fire extinguisher 300 is installed in the intake part of the bidirectional vent 150, it is possible to quickly put out a fire, and since there is no need to install a separate fire-protection system, such as a sprinkler, it is possible to reduce costs for facilities and installation.

The multi-functional ventilation system formed with the above configuration according to the embodiments of the present invention allows smooth suctioning and discharging of air through one pipe using the bidirectional vent 150, and in particular,an effect in that introduced outside air is uniformly distributed indoors and ventilation is effectively performed is achieved by the lighting bracket 120 blocking the inlet of the exhaust part 151 and the outlet of the intake part 152 from each other.

In addition, since the bidirectional vent 150 and the lighting unit 130 are integrated into one unit by the lighting bracket 120,it is possible to implement lighting and ventilation functions with one facility and hence individual lighting installation is not required, thereby reducing overall installation costs.

It should be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

## Claims

1. A multi-functional ventilation system comprising:
a fixing bracket (110) mounted at an interior ceiling panel;
a lighting bracket (120)installedunder the fixing bracket (110)to be spaced a predetermined intervalfrom the fixing bracket (110);
a lighting unit(130)installedunder the lighting bracket (120);
a lighting cover (140) mounted under the lighting bracket (120) to cover the lighting unit(130); and
a bidirectional vent (150)includingan exhaust part (151) through which interior air is discharged outdoors and an intake part (152) through which external air flows indoors,
wherein one end of the exhaust part (151) is open to the bottom of the fixing bracket (110) to communicate with an inside of a room and the other end thereof communicates with the exhaust pipe (210) at which a blower (230) is installed, and one end of the intake part (152) passesthrough the lighting bracket (120) through an inside of the exhaust part (151)and is open to a bottom of the lighting cover (140) and the other end thereof communicates with an intake pipe (220) into which the external air is introduced.

2. The multi-functional ventilation system of claim 1, further comprising a sensor(160) mounted on the fixing bracket (110) and configured to detect an occurrence of indoor fire,
wherein when the sensor(160) detects the occurrence of indoor fire, the blower (230) is operated to forcibly discharge the interior air to the outside.

3. The multi-functional ventilation system of claim 1 or 2, further comprising an emergency lamp(170) installed at the lighting bracket (120) and operated by power supplied from an internal battery in an event of power shut-off due to a fire.

4. The multi-functional ventilation system of claim 1, further comprising a filter(180) mounted atone end of the intake part (152) and configured to collect debris in the external air.

5. The multi-functional ventilation system of claim 2, further comprising a fire extinguishing agent applying pipe (190) having one end connected with an automatic fire extinguisher (300)installed in the outside and the other end configured to communicate with the insideof the room through the bidirectional vent (150),
wherein when the sensor(160) detects an occurrence of fire, the automatic fire extinguisher (300) is automatically operated to sprinkle a fire extinguishing agent indoors through the fire extinguishing agent applying pipe (190).
